# EUROPEAN PATENT SPECIFICATION

(11) **EP 2 998 020 B1**
(45) Date of publication and mention of the grant of the patent: **08.11.2017**
(21) Application number: 15185438.7
(22) Date of filing: 16.09.2015
(51) Int. Cl.: B01J 21/16, C10G 11/02

(54) **FLUID CATALYTIC CRACKING ADDITIVE COMPOSITION AND PROCESS FOR PREPARAING THEREOF**
FLUID-CATALYTIC-CRACKING-ADDITIVZUSAMMENSETZUNG UND VERFAHREN ZUR HERSTELLUNG DAVON
COMPOSITION D'ADDITIF DE CRAQUAGE CATALYTIQUE D'UN FLUIDE ET PROCÉDÉ POUR LEUR PRÉPARATION

(30) Priority: 17.09.2014 IN 2970MU2014
(43) Date of publication of application: 23.03.2016
(73) Proprietor: Indian Oil Corporation Limited, 400 051 Mumbai (IN)
(72) Inventor: SARKAR, Biswanath, 121007 Faridabad (IN); CHIDAMBARAM, Velusamy, 121007 Faridabad (IN); KADGAONKAR, Mahesh, 121007 Faridabad (IN); KARTHIKEYANI, Arumugam Velayutham, 121007 Faridabad (IN); SWAMY, Balaiah, 121007 Faridabad (IN); CHOUDHURY, Shiba Prasad, 121007 Faridabad (IN); KASLIWAL, Pankaj Kumar, 121007 Faridabad (IN); PULIKOTTIL, Alex, 121007 Faridabad (IN); THAKUR, Ram Mohan, 121007 Faridabad (IN); CHRISTOPHER, Jayaraj, 121007 Faridabad (IN); KUMAR, Brijesh, 121007 Faridabad (IN); RAJAGOPAL, Santanam, 121007 Faridabad (IN); DAS, Biswapriya, 121007 Faridabad (IN); KUVETTU, Mohan Prabhu, 121007 Faridabad (IN)
(74) Representative: Awapatent A/S

(56) References cited:
- EP-A1- 2 548 644
- WO-A1-2014/016764

## Description

### FIELD OF THE INVENTION

The present invention relates to a fluid catalytic cracking additive composition for cracking of heavy hydrocarbon feed stocks. In particular, the present invention relates to an additive composition comprising large crystallite low surface area alumina component in combination with phosphate compound in fluid catalytic cracking process and a process for preparing the same.

### BACKGROUND OF THE INVENTION

It is well accepted fact that the crude oils available to refineries are becoming heavier. Meanwhile, the demand for high value products such as gasoline and middle distillates is increasing. The trend towards heavy feedstock and urgent demand for high quality products coupled with tightening fuel regulations are presenting new challenges for refineries. Among the commercially available options, Fluid catalytic cracking (FCC) process is one of the key workhorses for conversion of heavy oils into high-value products.

Designing of FCC catalyst for processing heavy crudes is the key challenges to a catalyst developer for achieving these targets. The current generation FCC catalysts used today in cracking process for heavy oils are among the most sophisticated engineered catalysts, having high selectivity towards gasoline range products due to the presence of customized faujasite type zeolites having high acidity, higher hydrothermal stability and discrete pores in the range 6.5 Å to 13.5 Å. Heavy feeds contain high carbon residue, nitrogen, aromatics and contaminant metal such as nickel, vanadium, iron and copper. Processing such feeds while meeting changing product slate demand catalysts having higher metal tolerance, mesoporous active matrix and small pore zeolite. In a word, the catalyst activity, selectivity, particle size and shape, pore size and distribution, have to be optimized according to the properties of the heavy oils. Further, it is also very difficult to optimize all the said properties within FCC catalyst as this approach can adversely affect the performance of main catalyst. To overcome the above limitations use of additives as separate particles is in practice by the refiner to meet their specific objectives. There are several additive technologies available in the FCC technology market to obtain yields which meet refinery objectives.

Designing of such separate particle needs thorough understanding of interrelation between additive physico-chemical properties with activity/selectivity. The ability of the feed molecules to reach the active sites of the catalyst is important and for heavy resid molecules, mass transport limitations play an important role. In order to handle the challenges associated with cracking of resid molecules, it is essential to optimize the pore architecture and distribution of weak acid strength of additive formulations.

Cracking catalysts introduced from 1990's based on dispersible alumina and rare earth exchanged Y zeolites do possess improved hydrothermal stability and higher diesel selectivity (US 6528447 & US 6114267). However, as the zeolitic material is part of catalyst microsphere and as the main cracking acid sites present in zeolites are concealed under the coke, effect of matrix cannot be fully exploited in the formulations referred earlier.

WO 97/12011 relates to a process and product for bottom cracking, comprising of aluminosilicate, wherein a SiO₂ component is chemically compounded with an alumina component, an acid dispersible alumina, clay and non-dispersible alumina. In this composition, alumino-silicate is prepared by mixing in an aqueous medium, a C2 to C20 alkoxides hydrolysed with water. Additive besides containing vanadium trap also contain phosphate containing compound. Use of high concentration (> 25 wt %) boehmite alumina in combination with large pore alumina for cracking of heavy hydrocarbon molecules is not disclosed here.

US 4576709 refers to upgrading of residual oils to gasoline product with a coke selective and metal stable faujasite crystalline zeolite catalyst comprising at least 40 weight percent of alumina and rare earth metals. This patent does not disclose use of boehmite alumina and large pore alumina. US 4692236 deals with catalytic cracking process for heavy oil which comprises contacting heavy oil with a particulate mixture of a crystalline aluminosilicate-containing cracking catalyst particle and an alumina particle and/or a phosphorus-containing alumina particle mixed in the weight ratio of 80/20-20/80, under cracking conditions. Use of phosphate treated boehmite alumina for creation of weak acid sites and large pore alumina for easy diffusion of the heavy hydrocarbon molecules is not disclosed here.

EP2548644 (A1) relates to a Fluid Catalytic Cracking (FCC) additive preparation process and composition, which has high efficiency in the production of light olefins C2, C3 and C4 hydrocarbons, specifically propylene. It discloses the stabilization of medium pore zeolite specifically ZSM-5 using optimum phosphate salts at a pH in the range 7-9 with synergetic combination of silica rich binder to produce FCC additive having excellent stability under severe hydrothermal conditions.

WO2014016764 (A1) provides a catalyst composition for use in a catalytic cracking process, said catalyst composition comprises 3.5 to 15.5 % of pentasil zeolite, 9 to 40 % of ultra-stable Y (USY) or rare earth exchanged USY (REUSY) zeolite, 3.5 to 15 % of large pore active matrix based bottom up gradation component and 0.3 to 3 % of a metal trap component, the percentage being based on weight of the catalyst composition. It also provides a process for preparing the said catalyst composition and a catalytic cracking process comprising contacting the said catalyst composition with a feedstock.

Thus the object of present process is to offer a catalytic solution for up-gradation of heavier hydrocarbons mainly containing concarbon from 1-5 wt%, metals from 5-120 ppm as an additive. Another object of present invention is to crack heavier hydrocarbons mainly to diesel range products (LCO and naphtha). Yet another object of this process is to reduce the coke.

### SUMMARY OF THE INVENTION

Accordingly, the present invention provides a catalytic cracking additive composition comprising:
30-50 wt% boehmite alumina;
5-30 wt% dispersible alumina;
5-25 wt% colloidal silica;
10-50 wt% clay and
5-15 wt % phosphorus containing compound,

Wherein the catalytic cracking additive having ABD in the range of 0.80 - 0.90 gm/cm³, attrition index <5 and average pore diameter of 100 Å to 200 Å.

In an embodiment of the present invention, the boehmite alumina has surface area in the range of 20-60 m²/gm and crystallite size greater than 500 Å.

In another embodiment of the present invention, the dispersible alumina is selected from pseudo boehmite, Catapal B, Pural 200, Disperal 40 and Pural 400.

In another embodiment of the present invention, the colloidal silica is selected from sodium or ammonium stabilized or silica acid, having residual soda lower than 0.3 wt%, ammonia lower than 0.3 wt%, silica content ranging from 20-45 wt% and particle size from 10-400 nm.

In another embodiment of the present invention, the clay has particle size in the range of 1 to 5 micron.

In yet another embodiment of the present invention, the phosphorous containing compound is selected from the group consisting of phosphoric acid, di-ammonium hydrogen phosphate (DAHP) and mono-ammonium hydrogen phosphate.

In an embodiment of the present invention, the invention provides a process for preparing the catalytic cracking additive comprising of:
a. calcining alumina trihydrate and re-slurrrying with DM water and keeping in the autoclave at a temperature of 150-200 °C for 6-8 hrs. to obtain boehmite alumina;
b. dispersing boehmite alumina obtained in step (a) with water, adding a phosphate to obtain phosphated boehmite alumina and stirring;
c. dispersing alumina in water, stirring, milling and adding a diluted acid and stirring to obtain alumina gel;
d. dispersing a clay with water containing a dispersant, adding phosphate source, stirring and aging to obtain clay phosphate slurry;
e. adding alumina gel as obtained in step (c) to the clay phosphate slurry of step (d), adding a silica to obtain silica-alumina-clay-phosphate slurry, adding the phosphated boehmite alumina obtained in step (b) to obtain catalyst additive slurry;
f. spray drying and calcining to obtain the catalytic cracking additive.

In yet another embodiment of the present invention, the calcination in step (a) is performed at a temperature of 500 °C to 600 °C for a period of 1-3 hr.

In an embodiment of the present invention, stirring in step (b) is performed for a time period of 2 -3 hrs.

In an embodiment of the present invention, stirring and milling in step (c) is performed for a time period of 2-3 hrs.

In an embodiment of the present invention, the boehmite alumina obtained in step (a) has the crystallite size over 500Å.

In an embodiment of the present invention, the phosphate source in step (b) and step (d) is selected from the group consisting of phosphoric acid, di-ammonium hydrogen phosphate (DAHP) and mono-ammonium hydrogen phosphate.

In an embodiment of the present invention, the acid in step (c) is selected from nitric acid, formic acid and acetic acid.

In an embodiment of the present invention, the alumina used in step (c) is having average pore diameter from 30-400 Å.

In an embodiment of the present invention, silica in step (e) is selected from sodium or ammonium stabilized or silicic acid, having residual soda lower than 0.3 wt%, ammonia lower than 0.3 wt%, silica content ranging from 20-45 wt% and particle size from 10-400 nm.

In an embodiment of the present invention, the invention provides a process for reducing coke yield and bottom yield comprising contacting a hydrocarbon feed with a catalyst and the fluid catalytic cracking additive composition as claimed in claims 1, wherein the bottom yield is reduced by 0.5-2 wt% and coke yields by 1-2 wt%.

In an embodiment of the present invention, the additive is in the concentration of 5-25 wt% with respect to the catalyst.

In an embodiment of the present invention, the hydrocarbon feed has concarbon in the range of 1-5wt % and metals from 5-120 ppm.

In an embodiment of the present invention, the Total Cycle Oil cut point 150 °C to 370 °C is over 34 wt%.

### DESCRIPTION OF THE INVENTION

The present invention discloses an additive composition for cracking of heavy hydrocarbon feed stocks. The present invention also discloses a process for preparing the said additive composition.

Cracking of heavy hydrocarbon petroleum feed stocks involves parameters such as weak acid sites, which are distributed on large pore mesoporous materials. The present invention addresses these parameters. Synergy between large pore alumina with customized low surface area and high crystallite size boehmite alumina from aluminum trihydrate as raw material leads to enhanced performance of the catalyst of present invention when compared to prior art catalyst additives. The boehmite alumina is the main creator of weak acid site when coupled with phosphate source. This enhances the uniform distribution of weak acid sites in the large pore alumina matrix, which in turn enhances the overall activity of catalyst performance to crack heavy hydrocarbons molecules to value added products.

In an embodiment of the present invention a catalytic cracking additive composition is disclosed, comprising boehmite alumina, dispersible alumina, colloidal silica, clay and a phosphorous containing compound. In another embodiment the catalyst has ABD in the range of 0.80 -0.90 gm/cm³, attrition index <5 and average pore diameter of 100 Å to 200 Å.

In accordance with the present invention the boehmite alumina is present in the range of 30-50 wt% and has surface area in the range of 20-60 m²/gm and crystallite size greater than 500 Å. In accordance with the present invention the dispersible alumina is present in the range of 5-30 wt% and is selected from pseudoboehmite, gamma-alumina, and alpha-alumina, Catapal B, Pural 200, Disperal 40 and Pural 400.

In accordance with the present invention the colloidal silica is present in the range of 5-25 wt% and is selected from sodium or ammonium stabilized or silica acid, having residual soda lower than 0.3 wt%, ammonia lower than 0.3 wt%, silica content ranging from 20-45 wt% and particle size from 10-400 nm. In accordance with the present invention, clay is present in the range of 10-50 wt% and has particle size in the range of 1 to 5 micron.

In accordance with the present invention the phosphorous containing compound is present in the range of 5-15 wt % and selected from the group consisting of phosphoric acid, di-ammonium hydrogen phosphate (DAHP) and mono-ammonium hydrogen phosphate.

Another aspect of the present invention also discloses the process for preparing the catalytic cracking additive composition , wherein the process comprises steps of:
a. calcining alumina trihydrate and re-slurrrying with DM water and keeping in the autoclave at a temperature of 150-200 °C for 6-8 hrs. to obtain boehmite alumina;
b. dispersing boehmite alumina obtained in step (a) with water, adding a phosphate to obtain phosphated boehmite alumina and stirring;
c. dispersing an alumina in water, stirring, milling and adding a diluted acid and stirring to obtain alumina gel;
d. dispersing a clay with water containing a dispersant, adding phosphoric acid, stirring and aging to obtain clay phosphate slurry;
e. adding alumina gel as obtained in step (c) to the clay phosphate slurry of step (d), adding a silica to obtain silica-alumina-clay-phosphate slurry, adding the phosphated boehmite alumina obtained in step (b) to obtain catalyst additive slurry;
f. spray drying and calcining to obtain the catalytic cracking additive.

In accordance with the present invention, the calcination of alumina trihydrate is performed at a temperature of 500 °C to 600 °C for a period of 1 hr. The stirring of water containing phosphated boehmite alumina is performed for a time period of 2-3 hrs. In accordance with the present invention, the stirring and milling performed to obtain alumina gel is in the range of 2-3 hrs.

In an embodiment of the present invention, the stirring of water containing phosphated boehmite alumina is performed for a time period of 2 -3 hrs and, the stirring and milling performed to obtain alumina gel is for a time period of 2-3 hrs. In an embodiment, the boehmite alumina obtained in step (a) has the crystallite size over 500Å.

In accordance with the present invention the dispersible alumina is present in the range of 5-30 wt% and is selected from pseudoboehmite, Catapal B, Pural 200, Disperal 40 and Pural 400 and can be partly substituted with gamma-alumina, and alpha-alumina.

In accordance with the present invention the colloidal silica is present in the range of 5-25 wt% and is selected from sodium or ammonium stabilized or silicic acid, having residual soda lower than 0.3 wt%, ammonia lower than 0.3 wt%, silica content ranging from 20-45 wt% and particle size from 10-400 nm. In accordance with the present invention, clay is present in the range of 10-50 wt% and has particle size in the range of 1 to 5 micron. In accordance with the present invention the acid in step (c) is selected from nitric acid, formic acid and acetic acid. In accordance with the present invention the alumina used in step (c) is having average pore diameter from 30-400 Å.

In accordance with the present invention the phosphorous containing compound is present in the range of 5-15 wt % and selected from the group consisting of phosphoric acid, di-ammonium hydrogen phosphate (DAHP) and mono-ammonium hydrogen phosphate.

In yet another aspect of the present invention, a process for reducing coke yield and bottom yield is disclosed, said process comprising contacting a hydrocarbon feed with a catalyst and catalytic cracking additive. In an embodiment, when the process is carried out employing the said additive, the bottom yield is reduced by 0.5-2 wt% and coke yields by 1-2 wt%. In accordance with the present invention the additive is in the concentration of 5-25 wt% with respect to the catalyst.

In an embodiment the hydrocarbon feed has concarbon in the range of 1-5wt % and metals from 5-120 ppm. In yet another embodiment, the total cycle oil (TCO) cut point 150 °C to 370 °C is over 34 wt%.

### Having described the basic aspects of the present invention, the following non-limiting examples illustrate specific embodiment thereof.

The details examples for the said additives are given below where the catalyst prepared under Example-1 is without boehmite alumina and catalyst additive prepared under examples 3, 4 and 5 are the catalyst prepared under novel composition and process technique discloses in the present invention.

### Comparative Example-1:

**1.1** Preparation of alumina gel: 324.68 gm of Pural 400 grade alumina (LOI: 23 wt %) and 303.03 gm of PSB alumina (LOI=34) was dispersed in 1150 gm of DM water under stirring and milled for minimum 3 hrs. 25 gm of formic acid (85 wt %) was diluted with 100gm of DM water and was added to alumina-DM water mixture under stirring. Mixture was kept for 20 minutes to form alumina gel.
**1.2** Preparation of Clay Phosphate slurry: 411.76 gm of clay (LOI=15wt %) was dispersed in 453gm of DM water containing 5 gm of sodium-hexametaphosphate as dispersant. To this 121.36 gm of phosphoric acid (85 wt %) was added under stirring and aged for minimum 60 min to form clay-phosphate slurry.
**1.3** Preparation of final catalyst precursor slurry: Alumina gel obtained under 1.1 was added to the clay-phosphate slurry obtained under step 1.2 followed by addition of 333.33 gm of ammonium polysilicate (LOI=70 wt %) under stirring to form final slurry.
**1.4** Spray drying: Catalyst precursor slurry obtained under step 1.3 was spray dried in spray drier at inlet temperature 360 °C, outlet temperature 125 °C and feed pressure of 2-4 kg/cm².
**1.5** The spray dried product obtained under step 1.4 was calcined in the furnace at a temperature of 550 °C for 1 hr to produce the final catalyst additive product.

### Comparative Example-2:

**2.1** Preparation of boehmite alumina: Alumina trihydrate was calcined at 550 °C for 1 hr to produce a chi-phase alumina. 200 gm of chi-phase alumina was re-slurried with 1140 gm of DM water and was kept in autoclave at 200 °C for 6 hrs. Bring down the autoclave temperature to room temperature and filtered the material. The wet cake obtained was then dried in oven for 6 hrs to form boehmite alumina.
**2.2** Preparation of phosphated boehmite alumina: 303.03 gm of this boehmite alumina (LOI=34) prepared under step 2.1 was dispersed in 400 gm of DM water and 60.68 gm of phosphoric acid (85%) was added to it. The phosphated boehmite alumina slurry was then stirred for 2 hrs.
**2.3** Preparation of alumina gel: 324.68 gm of Pural 400 grade alumina (LOI: 23 wt %) was dispersed in 750 gm of DM water under stirring and milled for minimum 3 hrs. 25 gm of formic acid (85 wt %) was diluted with 100gm of DM water and was added to alumina-DM water mixture under stirring. Mixture was kept for 20 minutes to form alumina gel.
**2.4** Preparation of Clay Phosphate slurry: 411.76 gm of clay (LOI=15wt %) was dispersed in 453gm of DM water containing 5 gm of sodium-hexameta phosphate as dispersant. To this 60.68 gm of phosphoric acid (85 wt %) under stirring was added and aged for minimum 60 min to form clay-phosphate slurry.
**2.5** Preparation of final catalyst precursor slurry: Alumina gel obtained under 2.3 was added to the clay-phosphate slurry obtained under step 2.4, under vigorous stirring followed by addition of 333.33 gm of ammonium polysilicate (LOI=70 wt %) to form silica-alumina-clay-phosphate-slurry. Finally, phosphated boehmite alumina as prepared under 2.2 was added to this silica-alumina-clay-phosphate-slurry to form the final catalyst additive slurry.
**2.6** Spray drying: Catalyst precursor slurry obtained under step 2.5 was spray dried with spray drier inlet temperature 360 °C, out let temperature 125 °C and feed pressure of 2-4 kg/cm².
**2.7** The spray dried product obtained under step 2.6 was calcined in the furnace at a temperature of 550°C for 1 hr to produce the final catalyst additive product.

### Example-3:

**3.1** Preparation of boehmite alumina: Initially alumina trihydrate was calcined at 550 °C for 1 hr to produce a chi-phase alumina. 300 gm of chi-phase alumina was re-slurried with 1710 gm of DM water and was kept in autoclave at 200 °C for 6 hrs. Bring down the autoclave temperature to room temperature and filtered the material. The wet cake obtained was then dried in oven for 6 hrs to form boehmite alumina.
**3.2** Preparation of phosphated boehmite alumina: 454.55 gm of this boehmite alumina (LOI=34) prepared under step 3.2 was dispersed in 600 gm of DM water and 60.68 gm of phosphoric acid (85%) was added to it. The phosphated boehmite alumina slurry was then stirred for 2 hrs.
**3.3** Preparation of alumina gel: 324.68 gm of Pural 400 grade alumina (LOI: 23 wt %) was dispersed in 750 gm of DM water under stirring and milled for minimum 3 hrs. 25 gm of formic acid (85 wt %) was diluted with 100 gm of DM water and was added to alumina-DM water mixture under stirring. Mixture was kept for 20 minutes to form alumina gel.
**3.4** Preparation of Clay Phosphate slurry: 294.12 gm of clay (LOI=15 wt %) was dispersed in 324 gm of DM water containing 5 gm of sodium-hexameta phosphate as dispersant. To this 60.68 gm of phosphoric acid (85 wt %) under stirring was added and aged for minimum 60 min to form clay-phosphate slurry.
**3.5** Preparation of final catalyst precursor slurry: Alumina gel obtained under 3.3 was added to the clay-phosphate slurry obtained under step 3.4, under vigorous stirring followed by addition of 333.33 gm of ammonium polysilicate (LOI=70 wt %) to form silica-alumina-clay-phosphate-slurry. Finally, phosphated boehmite alumina as prepared under 3.2 was added to this silica-alumina-clay-phosphate-slurry to form the final catalyst additive slurry.
**3.6** Spray drying: Catalyst precursor slurry obtained under step 3.5 was spray dried with spray drier inlet temperature 360 °C, out let temperature 125 °C and feed pressure of 2-4 kg/cm².
**3.7** The spray dried product obtained under step 3.6 was calcined in the furnace at a temperature of 550 °C for 1 hr to produce the final catalyst additive product.

### Example-4:

**4.1** Preparation of boehmite alumina: Initially alumina trihydrate was calcined at 550 °C for 1 hr to produce a chi-phase alumina. 350 gm of chi-phase alumina was re-slurred with 1995 gm of DM water and was kept in autoclave at 200 °C for 6 hrs. Bring down the autoclave temperature to room temperature and filtered the material. The wet cake obtained was then dried in oven for 6 hrs to form boehmite alumina.
**4.2** Preparation of phosphated boehmite alumina: 530.30 gm of this boehmite alumina (LOI=34) prepared under step 4.1 was dispersed in 700 gm of DM water and 60.68 gm of phosphoric acid (85%) was added to it. The phosphated boehmite alumina slurry was then stirred for 2 hrs.
**4.3** Preparation of alumina gel: 324.68 gm of Pural 400 grade alumina (LOI: 23 wt %) was dispersed in 750 gm of DM water under stirring and milled it for minimum 3 hrs. 25 gm of formic acid (85 wt %) was diluted with 100 gm of DM water and was added to alumina-DM water mixture under stirring. Mixture was kept for 20 minutes to form alumina gel.
**4.4** Preparation of Clay Phosphate slurry: 235.29 gm of clay (LOI=15 wt %) was dispersed in 258 gm of DM water containing 5 gm of sodium-hexameta phosphate dispersant. To this 60.68 gm of phosphoric acid (85 wt %) under stirring was added and aged for minimum 60 min to form clay-phosphate slurry.
**4.5** Preparation of final catalyst precursor slurry: Alumina gel obtained under 4.3 was added to the clay-phosphate slurry obtained under step 4.4, under vigorous stirring followed by addition of 333.33 gm of ammonium polysilicate (LOI=70 wt %) to form silica-alumina-clay-phosphate-slurry. Finally, phosphated boehmite alumina as prepared under 4.2 was added to this silica-alumina-clay-phosphate-slurry to form the final catalyst additive slurry.
**4.6** Spray drying: Catalyst precursor slurry obtained under step 4.5 was spray dried with spray drier inlet temperature 360 °C, out let temperature 125 °C and feed pressure of 2-4 kg/cm².
**4.7** The spray dried product obtained under step 4.6 was calcined in the furnace at a temperature of 550 °C for 1 hr to produce the final catalyst additive product.

### Example-5:

**5.1** Preparation of boehmite alumina: Initially alumina trihydrate was calcined at 550 °C for 1 hr to produce a chi-phase alumina. 400 gm of chi-phase alumina was re-slurried with 2280 gm of DM water and was kept in autoclave at 200 °C for 6 hrs. Bring down the autoclave temperature to room temperature and filtered the material. The wet cake obtained was then dried in oven for 6 hrs to form boehmite alumina.
**5.2** Preparation of phosphated boehmite alumina: 606.06 gm of this boehmite alumina (LOI=34) prepared under step 5.1 was dispersed in 800 gm of DM water and 60.68 gm of phosphoric acid (85%) was added to it. The phosphated boehmite alumina slurry was then stirred for 2 hrs.
**5.3** Preparation of alumina gel: 259.74 gm of Pural 400 grade alumina (LOI: 23 wt %) was dispersed in 600 gm of DM water under stirring and milled for minimum 3 hrs. 20 gm of formic acid (85 wt %) was diluted with 100 gm of DM water and was added to alumina-DM water mixture under stirring. Mixture was kept for 20 minutes to form alumina gel.
**5.4** Preparation of Clay Phosphate slurry: 235.29 gm of clay (LOI=15wt %) was dispersed in 258 gm of DM water containing 5 gm of sodium-hexameta phosphate dispersant. To this 60.68 gm of phosphoric acid (85 wt %) under stirring was added and aged for minimum 60 min to form clay-phosphate slurry.
**5.5** Preparation of final catalyst precursor slurry: Alumina gel obtained under 5.3 was added to the clay-phosphate slurry obtained under step 5.4, under vigorous stirring followed by addition of 333.33 gm of ammonium polysilicate (LOI=70 wt %) to form silica-alumina-clay-phosphate-slurry. Finally, phosphated boehmite alumina as prepared under 5.2 was added to this silica-alumina-clay-phosphate-slurry to form the final catalyst additive slurry.
**5.6** Spray drying: Catalyst precursor slurry obtained under step 5.5 was spray dried with spray drier inlet temperature 360 °C, out let temperature 125 °C and feed pressure of 2-4 kg/cm².
**5.7** The spray dried product obtained under step 5.6 was calcined in the furnace at a temperature of 550 °C for 1 hr to produce the final catalyst additive product.

### Comparative Example-6:

**6.1** Preparation of boehmite alumina: Initially alumina trihydrate was calcined at 550 °C for 1 hr to produce a chi-phase alumina. 550 gm of chi-phase alumina was re-slurried with 3135 gm of DM water and was kept in autoclave at 200 °C for 6 hrs. Bring down the autoclave temperature to room temperature and filtered the material. The wet cake obtained was then dried in oven for 6 hrs to form boehmite alumina.
**6.2** Preparation of phosphated boehmite alumina: 833.33 gm of this boehmite alumina (LOI=34) prepared under step 6.1 was dispersed in 700 gm of DM water and 60.68 gm of phosphoric acid (85%) was added to it. The phosphated boehmite alumina slurry was then stirred for 2 hrs.
**6.3** Preparation of alumina gel: 129.87 gm of Pural 400 grade alumina (LOI: 23 wt %) was dispersed in 300 gm of DM water under stirring and milled it for minimum 3 hrs. 10 gm of formic acid (85 wt %) was diluted with 100 gm of DM water and was added to alumina-DM water mixture under stirring. Mixture was kept for 20 minutes to form alumina gel.
**6.4** Preparation of Clay Phosphate slurry: 176.47 gm of clay (LOI=15 wt %) was dissolved in 195 gm of DM water containing 5 gm of sodium-hexameta phosphate dispersant. To this 60.68 gm of phosphoric acid (85 wt %) under stirring was added and aged for minimum 60 min to form clay-phosphate slurry.
**6.5** Preparation of final catalyst precursor slurry: Alumina gel obtained under 6.3 was added to the clay-phosphate slurry obtained under step 6.4, under vigorous stirring followed by addition of 333.33 gm of ammonium polysilicate (LOI=70 wt %) to form silica-alumina-clay-phosphate-slurry. Finally, phosphated boehmite alumina as prepared under 6.2 was added to this silica-alumina-clay-phosphate-slurry to form the final catalyst additive slurry.
**6.6** Spray drying: Catalyst precursor slurry obtained under step 6.5 was spray dried with spray drier inlet temperature 360 °C, out let temperature 125 °C and feed pressure of 2-4 kg/cm².
**6.7** The spray dried product obtained under step 6.6 was calcined in the furnace at a temperature of 550 °C for 1 hr to produce the final catalyst additive product.

Properties of feed where all the above additives prepared as per examples-1 to 5 are evaluated are given below Table-1:

**Table-1: Feed properties**

| **Sr. No.** | **Attributes** | **Unit** | **Value** |
|---|---|---|---|
| 1 | Density @ 15 °C | g/cc | 0.887 |
| 2 | Kinematic Viscosity @ 100 °C | Cst | 7.4 |
| 3 | Distillation, D-1160 | | |
| 4 | IBP | °C | 162 |
| 5 | 5% | °C | 267 |
| 8 | 30% | °C | 370 |
| 9 | 50% | °C | 409 |
| 10 | 70% | °C | 457 |
| 11 | Sulphur | wt% | 1.72 |
| 12 | Total N₂ | ppm | 860 |
| 13 | CCR | wt% | 3.3 |
| 14 | V | ppm | 23 |
| 15 | Ni | ppm | 9 |
| 16 | Na | ppm | 1.8 |
| 17 | Fe | ppm | 2.4 |

Performance and physicochemical properties of residue up-gradation additive prepared by the above Examples-1 to 6 are shown in Table-2 & 3

**Table-2: Performance results along with physical properties and additive composition:**

| **Additive Ref:** | | **Comparative Example-1** | **Comparative Example-2** | **Example-3** | **Example-4** | **Example-5** | **Comparative Example-6** |
|---|---|---|---|---|---|---|---|
| | **Base** | **Base + 5 wt% additive without boehmite alumina** | **Base + 5 wt% lab additive** | **Base + 5 wt% lab additive** | **Base + 5 wt% lab additive** | **Base + 5 wt% lab additive** | **Base + 5 wt% lab additive** |
| **Cat/oil** | 5.26 | 5.26 | 5.26 | 5.26 | 5.26 | 5.26 | 5.26 |
| **Coke** | 5.16 | 4.89 | 4.64 | 4.66 | 4.65 | 4.77 | 4.87 |
| **DG** | 2.02 | 1.61 | 1.69 | 1.8 | 1.75 | 1.65 | 1.65 |
| **LPG** | 16.08 | 16.6 | 18.17 | 18.58 | 18.88 | 18.39 | 18.19 |
| **Gasoline (C5-150)** | 34.87 | 36.7 | 35.64 | 35.12 | 35.36 | 35.15 | 35.35 |
| **HN (150-220)** | 14.22 | 14.25 | 14.36 | 15.34 | 15.35 | 15.31 | 14.31 |
| **LCO (220-370)** | 19.39 | 19.6 | 19.08 | 19.33 | 19.21 | 19.34 | 19.24 |
| **Bottom (370+)** | 8.26 | 6.35 | 6.42 | 5.17 | 4.80 | 5.39 | 6.39 |
| **TCO (HN+LC O)** | 33.61 | 33.85 | 33.44 | 34.67 | 34.56 | 34.65 | 33.55 |

**Table-3: Physical properties and additive composition**

| | **Comparative Example-1** | **Comparative Example-2** | **Example-3** | **Example-4** | **Example-5** | **Comparative Example-6** |
|---|---|---|---|---|---|---|
| **Additive composition** | | | | | | |
| PSB alumina | 20 | 0 | 0 | 0 | 0 | 0 |
| Boehmite alumina | 0 | 20 | 30 | 35 | 40 | 55 |
| Pural 400 | 25 | 25 | 25 | 25 | 20 | 10 |
| SiO₂ | 10 | 10 | 10 | 10 | 10 | 10 |
| H₃PO₄ as PO₄ | 10 | 10 | 10 | 10 | 10 | 10 |
| Clay | 35 | 35 | 25 | 20 | 20 | 15 |

| **Additive physical properties** | | | | | | |
|---|---|---|---|---|---|---|
| ABD, gm/cc | 0.73 | 0.75 | 0.82 | 0.88 | 0.82 | 0.68 |
| Attrition Index | 4.9 | 5.9 | 4.2 | 3.5 | 4.5 | 7.6 |
| Average pore dia Å | 95 | 90 | 110 | 112 | 102 | 70 |

## Claims

1. A fluid catalytic cracking additive composition comprising:
30-50 wt% boehmite alumina;
5-30 wt% dispersible alumina;
5-25 wt% colloidal silica;
10-50 wt% clay and
5-15 wt % phosphorus containing compound,
wherein the catalytic cracking additive is having ABD in the range of 0.80 -0.90 gm/cm³, attrition index <5 and average pore diameter of 100Å to 200 Å.

2. The fluid catalytic cracking additive composition as claimed in claim 1, wherein the boehmite alumina has surface area in the range of 20-60 m²/gm and crystallite size greater than 500 Å.

3. The fluid catalytic cracking additive composition as claimed in claim 1, wherein the dispersible alumina is selected from pseudoboehmite, Catapal B, Pural 200, Disperal 40 and Pural 400.

4. The fluid catalytic cracking additive composition as claimed in claim 1, wherein the colloidal silica is selected from sodium or ammonium stabilized or silicic acid, having residual soda lower than 0.3 wt%, ammonia lower than 0.3 wt%, silica content ranging from 20-45 wt% and particle size from 10-400 nm.

5. The fluid catalytic cracking additive composition as claimed in claim 1, wherein the clay has particle size in the range of 1 to 5 micron.

6. The fluid catalytic cracking additive composition as claimed in claim 1, wherein the phosphorous containing compound is selected from the group consisting of phosphoric acid, di-ammonium hydrogen phosphate (DAHP) and mono-ammonium hydrogen phosphate.

7. A process for preparing the fluid catalytic cracking additive composition as claimed in claim 1, wherein the process comprises steps of:
a) calcining alumina trihydrate and re-slurrrying with DM water and keeping in the autoclave at a temperature of 150-200 °C for 6-8 hrs. to obtain boehmite alumina;
b) dispersing boehmite alumina obtained in step (a) with water, adding a phosphate to obtain phosphated boehmite alumina and stirring;
c) dispersing alumina in water, stirring, milling and adding a diluted acid and stirring to obtain alumina gel;
d) dispersing a clay with water containing a dispersant, adding phosphate source, stirring and aging to obtain clay phosphate slurry;
e) adding alumina gel as obtained in step (c) to the clay phosphate slurry of step (d), adding a silica to obtain silica-alumina-clay-phosphate slurry, adding the phosphated boehmite alumina obtained in step (b) to obtain catalyst additive slurry;
f) spray drying and calcining to obtain the catalytic cracking additive.

8. The process as claimed in claim 7, wherein the calcination in step (a) is performed at a temperature of 500 °C to 600 °C for a period of 1-3 hr.

9. The process as claimed in claim 7, wherein stirring in step (b) is performed for a time period of 2 -3 hrs.

10. The process as claimed in claim 7, wherein stirring and milling in step (c) is performed for a time period of 2-3 hrs.

11. The process as claimed in claim 7, wherein the boehmite alumina obtained in step (a) has the crystallite size over 500 Å.

12. The process as claimed in claim 7, wherein the phosphate source in step (b) and step (d) is selected from the group consisting of phosphoric acid, di-ammonium hydrogen phosphate (DAHP) and mono-ammonium hydrogen phosphate.

13. The process as claimed in claim 7, wherein the acid in step (c) is selected from nitric acid, formic acid and acetic acid.

14. The process as claimed in claim 7, wherein the alumina used in step (c) is having average pore diameter from 30-400 Å.

15. The process as claimed in claim 7, wherein silica in step (e) is selected from sodium or ammonium stabilized or silicic acid, having residual soda lower than 0.3 wt%, ammonia lower than 0.3 wt%, silica content ranging from 20-45 wt% and particle size from 10-400 nm.

16. A process for reducing coke yield and bottom yield comprising contacting a hydrocarbon feed with a catalyst and the fluid catalytic cracking additive composition as claimed in claim 1, wherein the bottom yield is reduced by 0.5-2 wt% and coke yields by 1-2 wt%.

17. The process as claimed in claim 16 , wherein the additive is in the concentration of 5-25 wt% with respect to the catalyst.

18. The process as claimed in claim 16, wherein the hydrocarbon feed has concarbon in the range of 1-5wt % and metals from 5-120 ppm.

19. The process as claimed in claim 16, wherein the Total Cycle Oil cut point 150 °C to 370 °C is over 34 wt%.

## Patentansprüche

1. Additivzusammensetzung für das katalytische Cracken in der Wirbelschicht, umfassend:
30-50 Gew.-% Böhmit-Aluminiumoxid;
5-30 Gew.-% dispergierbares Aluminiumoxid;
5-25 Gew.-% kolloidales Siliciumdioxid;
10-50 Gew.-% Ton und
5-15 Gew.-% phosphorhaltige Verbindung,
wobei das Additiv für das katalytische Cracken eine ABD im Bereich von 0,80-0,90 g/cm³, einen Abrieb-Index <5 und einen mittleren Porendurchmesser von 100 Å bis 200 Å aufweist.

2. Additivzusammensetzung für das katalytische Cracken in der Wirbelschicht nach Anspruch 1, wobei das Böhmit-Aluminiumoxid eine Oberfläche im Bereich von 20 bis 60 m²/g und eine Kristallitgröße von mehr als 500 Å aufweist.

3. Additivzusammensetzung für das katalytische Cracken in der Wirbelschicht nach Anspruch 1, wobei das dispergierbare Aluminiumoxid aus Pseudoböhmit, Catapal B, Pural 200, Disperal 40 und Pural 400 ausgewählt ist.

4. Additivzusammensetzung für das katalytische Cracken in der Wirbelschicht nach Anspruch 1, wobei das kolloidale Siliciumdioxid aus natrium- oder ammoniumstabilisiertem Siliciumdioxid oder Kieselsäure mit einem Restsodagehalt von weniger als 0,3 Gew.-%, einem Ammoniakgehalt von weniger als 0,3 Gew.-%, einem Siliciumdioxidgehalt im Bereich von 20-45 Gew.-% und einer Teilchengröße von 10-400 nm ausgewählt ist.

5. Additivzusammensetzung für das katalytische Cracken in der Wirbelschicht nach Anspruch 1, wobei der Ton eine Teilchengröße im Bereich von 1 bis 5 Mikron aufweist.

6. Additivzusammensetzung für das katalytische Cracken in der Wirbelschicht nach Anspruch 1, wobei die phosphorhaltige Verbindung aus der Gruppe bestehend aus Phosphorsäure, Diammoniumhydrogenphosphat (DAHP) und Monoammoniumhydrogenphosphat ausgewählt ist.

7. Verfahren zur Herstellung einer Additivzusammensetzung für das katalytische Cracken in der Wirbelschicht nach Anspruch 1, wobei das Verfahren folgende Schritte umfasst:
a) Calcinieren von Aluminiumoxidtrihydrat und Wiederaufschlämmen mit VE-Wasser und Halten im Autoklaven bei einer Temperatur von 150-200 °C über einen Zeitraum von 6-8 h zum Erhalt von Böhmit-Aluminiumoxid;
b) Dispergieren von in Schritt (a) erhaltenem Böhmit-Aluminiumoxid mit Wasser, Zugeben eines Phosphats zum Erhalt von phosphatiertem Böhmit-Aluminiumoxid und Rühren;
c) Dispergieren von Aluminiumoxid im Wasser, Rühren, Mahlen und Zugeben einer verdünnten Säure und Rühren zum Erhalt von Aluminiumoxid-Gel;
d) Dispergieren eines Tons mit Wasser, das ein Dispergiermittel enthält, Zugeben einer Phosphatquelle, Rühren und Altern zum Erhalt von Tonphosphat-Aufschlämmung;
e) Zugeben von in Schritt (c) erhaltenem Aluminiumoxid-Gel zu der Tonphosphat-Aufschlämmung aus Schritt (d), Zugeben eines Siliciumdioxids zum Erhalt von Siliciumdioxid-Aluminiumoxid-Tonphosphat-Aufschlämmung, Zugeben des in Schritt (b) erhaltenen phosphatierten Böhmit-Aluminiumoxids zum Erhalt einer Katalysatoradditiv-Aufschlämmung;
f) Sprühtrocknen und Calcinieren zum Erhalt des Additivs für das katalytische Cracken.

8. Verfahren nach Anspruch 7, bei dem die Calcinierung in Schritt (a) bei einer Temperatur von 500 °C bis 600 °C über einen Zeitraum von 1-3 h durchgeführt wird.

9. Verfahren nach Anspruch 7, bei dem das Rühren in Schritt (b) über einen Zeitraum von 2-3 h durchgeführt wird.

10. Verfahren nach Anspruch 7, bei dem das Rühren und Mahlen in Schritt (c) über einen Zeitraum von 2-3 h durchgeführt wird.

11. Verfahren nach Anspruch 7, bei dem das in Schritt (a) erhaltene Böhmit-Aluminiumoxid eine Kristallitgröße über 500 Å aufweist.

12. Verfahren nach Anspruch 7, bei dem die Phosphatquelle in Schritt (b) und Schritt (d) aus der Gruppe bestehend aus Phosphorsäure, Diammoniumhydrogenphosphat (DAHP) und Monoammoniumhydrogenphosphat ausgewählt wird.

13. Verfahren nach Anspruch 7, bei dem die Säure in Schritt (c) aus Salpetersäure, Ameisensäure und Essigsäure ausgewählt wird.

14. Verfahren nach Anspruch 7, bei dem das in Schritt (c) verwendete Aluminiumoxid einen mittleren Porendurchmesser von 30-400 Å aufweist.

15. Verfahren nach Anspruch 7, bei dem das Siliciumdioxid in Schritt (e) aus natrium- oder ammoniumstabilisiertem Siliciumdioxid oder Kieselsäure mit einem Restsodagehalt von weniger als 0,3 Gew.-%, einem Ammoniakgehalt von weniger als 0,3 Gew.-%, einem Siliciumdioxidgehalt im Bereich von 20-45 Gew.-% und einer Teilchengröße von 10-400 nm ausgewählt wird.

16. Verfahren zur Verringerung der Koksausbeute und Sumpfausbeute, bei dem man einen Kohlenwasserstoff-Einsatzstoff mit einem Katalysator und der Additivzusammensetzung für das katalytische Cracken in der Wirbelschicht nach Anspruch 1 in Berührung bringt, wobei die Sumpfausbeute um 0,5-2 Gew.-% verringert wird und die Koksausbeute um 1-2 Gew.-% verringert wird.

17. Verfahren nach Anspruch 16, bei dem das Additiv in einer Konzentration von 5-25 Gew.-%, bezogen auf den Katalysator, vorliegt.

18. Verfahren nach Anspruch 16, bei dem der Kohlenwasserstoff-Einsatzstoff Concarbon im Bereich von 1-5 Gew.-% und Metalle von 5-120 ppm aufweist.

19. Verfahren nach Anspruch 16, bei dem der Total-Cycle-Oil-Schnittpunkt von 150 °C bis 370 °C über 34 Gew.-% beträgt.

## Revendications

1. Composition d'additif de craquage catalytique fluide comprenant :
30 à 50 % en poids d'alumine boehmite ;
5 à 30 % en poids d'alumine dispersible ;
5 à 25 % en poids de silice colloïdale ;
10 à 50 % en poids d'argile et
5 à 15 % en poids de composé contenant du phosphore,
dans laquelle l'additif de craquage catalytique présente une ABD dans la plage de 0,80 à 0,90 g/cm³, un indice d'attrition < 5 et un diamètre de pore moyen de 100 Å à 200 Å.

2. Composition d'additif de craquage catalytique fluide selon la revendication 1, dans laquelle l'alumine boehmite présente une surface dans la plage de 20 à 60 m²/gm et une taille de cristallite supérieure à 500 Å.

3. Composition d'additif de craquage catalytique fluide selon la revendication 1, dans laquelle l'alumine dispersible est choisie parmi la pseudoboehmite, Catapal B, Pural 200, Disperal 40 et Pural 400.

4. Composition d'additif de craquage catalytique fluide selon la revendication 1, dans laquelle la silice colloïdale est choisie parmi la silice colloïdale stabilisée par le sodium ou l'ammonium, ou l'acide silicique, contenant du bicarbonate de sodium résiduel inférieur à 0,3 % en poids, de l'ammoniac inférieur à 0,3 % en poids, une teneur en silice dans la plage de 20 à 45 % en poids et une taille de particule de 10 à 400 nm.

5. Composition d'additif de craquage catalytique fluide selon la revendication 1, dans laquelle l'argile a une taille de particule dans la plage de 1 à 5 microns.

6. Composition d'additif de craquage catalytique fluide selon la revendication 1, dans laquelle le composé contenant du phosphore est choisi dans le groupe constitué de l'acide phosphorique, l'hydrogénophosphate de diammonium (DAHP) et l'hydrogénophosphate de monoammonium.

7. Procédé de préparation de la composition d'additif de craquage catalytique fluide selon la revendication 1, le procédé comprenant les étapes de :
a) calcination de trihydrate d'alumine et remise en suspension concentrée avec de l'eau déminéralisée et maintien dans l'autoclave à une température de 150 à 200 °C pendant 6 à 8 h pour obtenir de l'alumine boehmite ;
b) dispersion de l'alumine boehmite obtenue dans l'étape (a) avec de l'eau, ajout d'un phosphate pour obtenir de l'alumine boehmite phosphatée et agitation ;
c) dispersion de l'alumine dans l'eau, agitation, broyage et ajout d'un acide dilué et agitation pour obtenir un gel d'alumine ;
d) dispersion d'une argile avec de l'eau contenant un dispersant, ajout d'une source de phosphate, agitation et vieillissement pour obtenir une suspension concentrée de phosphate d'argile ;
e) ajout du gel d'alumine obtenu dans l'étape (c) à la suspension concentrée de phosphate d'argile de l'étape (d), ajout d'une silice pour obtenir une suspension concentrée de silice-alumine-argile-phosphate, ajout de l'alumine boehmite phosphatée obtenue dans l'étape (b) pour obtenir une suspension concentrée d'additif catalyseur ;
f) séchage par pulvérisation et calcination pour obtenir l'additif de craquage catalytique.

8. Procédé selon la revendication 7, dans lequel la calcination dans l'étape (a) est conduite à une température de 500 °C à 600 °C pendant une durée de 1 à 3 h.

9. Procédé selon la revendication 7, dans lequel l'agitation dans l'étape (b) est conduite pendant une durée de 2 à 3 h.

10. Procédé selon la revendication 7, dans lequel l'agitation et le broyage dans l'étape (c) sont conduites pendant une durée de 2 à 3 h.

11. Procédé selon la revendication 7, dans lequel l'alumine boehmite obtenue dans l'étape (a) a une taille de cristallite supérieure à 500 Å.

12. Procédé selon la revendication 7, dans lequel la source de phosphate dans l'étape (b) et l'étape (d) est choisie dans le groupe constitué de l'acide phosphorique, l'hydrogénophosphate de diammonium (DAHP) et l'hydrogénophosphate de monoammonium.

13. Procédé selon la revendication 7, dans lequel l'acide dans l'étape (c) est choisi parmi l'acide nitrique, l'acide formique et l'acide acétique.

14. Procédé selon la revendication 7, dans lequel l'alumine utilisée dans l'étape (c) possède un diamètre de pore moyen de 30 à 400 Å.

15. Procédé selon la revendication 7, dans lequel la silice dans l'étape (e) est choisie parmi la silice stabilisée par le sodium ou l'ammonium, ou l'acide silicique, contenant du bicarbonate de sodium résiduel inférieur à 0,3 % en poids, de l'ammoniac inférieur à 0,3 % en poids, une teneur en silice dans la plage de 20 à 45 % en poids et une taille de particule de 10 à 400 nm.

16. Procédé de réduction du rendement de coke et du rendement de résidu comprenant la mise en contact d'une matière première hydrocarbure avec un catalyseur et la composition d'additif de craquage catalytique fluide selon la revendication 1, dans lequel le rendement de résidu est réduit de 0,5 à 2 % en poids et le rendement de coke de 1 à 2 % en poids.

17. Procédé selon la revendication 16, dans lequel l'additif est à une concentration de 5 à 25 % en poids par rapport au catalyseur.

18. Procédé selon la revendication 16, dans lequel la matière première hydrocarbure comporte du concarbone dans la plage de 1 à 5 % en poids et des métaux de 5 à 120 ppm.

19. Procédé selon la revendication 16, dans lequel le point de fractionnement de pétrole de cycle total de 150 °C à 370 °C est supérieur à 34 % en poids.
